# EUROPEAN PATENT APPLICATION

(11) **EP 4 697 554 A1**
(43) Date of publication of application: **18.02.2026**
(21) Application number: 25192961.8
(22) Date of filing: 30.07.2025
(51) Int. Cl.: H02J 7/00, H02J 9/00, H02J 9/06

(54) **WAKE-UP CIRCUIT, BATTERY MANAGEMENT SYSTEM, AND BATTERY SYSTEM**

(30) Priority: 01.08.2024 CN 202411052279
(71) Applicant: Xiamen Ampack Technology Limited, Xiamen City, Fujian Province, 361000 (CN)
(72) Inventor: FU, Ziyue, Xiamen City, Fujian Province 361000 (CN); GAO, Ming, Xiamen City, Fujian Province 361000 (CN); LEI, Yu, Xiamen City, Fujian Province 361000 (CN)
(74) Representative: Icosa

(57) **Abstract**

A wake-up circuit includes: a power supply unit and a wake-up signal generation unit connected to the power supply unit, where the power supply unit is configured to be connected to an external power supply and supply power to the wake-up signal generation unit based on the external power supply, and the wake-up signal generation unit is configured to be connected to the external power supply and generate a wake-up signal based on the external power supply; a drive unit connected to both the power supply unit and the wake-up signal generation unit, where the drive unit includes a switch drive circuit; and a switch and a power circuit connected to the switch, where the switch is connected to the switch drive circuit and configured to be turned on or off based on a control signal of the switch drive circuit, and the power circuit is configured to be connected to a battery module through the switch. The power circuit, battery management system, and battery system provided in some embodiments of this application can achieve a wake-up function based on an external power supply signal.

## Description

### TECHNICAL FIELD

This application relates to the field of battery technology, and specifically, to a wake-up circuit, a battery management system, and a battery system.

### BACKGROUND

A battery management system (Battery Management System, BMS) can manage and control a battery module to prevent overcharging and over-discharging of a battery. The BMS includes a battery control unit (Battery Control Unit, BCU) and a battery management unit (Battery Management Unit, BMU), and the battery module supplies power to the BCU and the BMU. When the BMS is in an unused state, the BCU is powered off and enters a shutdown state, and the BMU enters a sleep state. When the BMS needs to be used, the BMS requires to be waken up.

### SUMMARY

Some embodiments of this application provide a wake-up circuit, a battery management system, and a battery system, which can achieve a wake-up function based on an external power supply signal.

According to a first aspect, an embodiment of this application provides a wake-up circuit including: a power supply unit and a wake-up signal generation unit connected to the power supply unit, where the power supply unit is configured to be connected to an external power supply and supply power to the wake-up signal generation unit based on the external power supply, and the wake-up signal generation unit is configured to be connected to the external power supply and generate a wake-up signal based on the external power supply; a drive unit connected to both the power supply unit and the wake-up signal generation unit, where the drive unit includes a switch drive circuit, and a switch and a power circuit connected to the switch, where the switch is connected to the switch drive circuit and configured to be turned on or off based on a control signal of the switch drive circuit, and the power circuit is configured to be connected to a battery module through the switch.

According to the wake-up circuit provided in this embodiment of this application, when the external power supply is powered and connected to the power supply unit, the power supplied by the external power supply is input to the power supply unit; the power supply unit processes the power from the external power supply to output wake-up power; the wake-up power supplies power to the wake-up signal generation unit and the drive unit; the wake-up signal generation unit starts operating and generates a wake-up signal based on the power provided by the external power supply; the drive unit starts operating; and the switch drive circuit generates a control signal for instructing the switch to be turned on based on the wake-up signal generated by the wake-up signal generation unit. After the switch receives the control signal for instructing the switch to be turned on from the switch drive circuit, the switch is turned on; and after the switch is turned on, an electrical connection between the battery module and the power circuit is established, the power circuit is in an operating state, and the power circuit generates power and supplies the power to the battery management system, thereby achieving the wake-up of the battery management system.

In a possible implementation of the first aspect, the wake-up signal ends after a preset time.

In a possible implementation of the first aspect, the switch drive circuit includes an isolated switch driver, where the isolated switch driver includes a primary side power voltage pin, a secondary side power voltage pin, a signal input pin, and a signal output pin.

The power supply unit is connected to both the primary side power voltage pin and the secondary side power voltage pin, the signal input pin is connected to the wake-up signal generation unit, and the signal output pin is connected to the switch.

In a possible implementation of the first aspect, the drive unit includes: a micro control unit, where the micro control unit is connected to the power circuit; and a signal latch unit, where the signal latch unit is connected to both the micro control unit and the signal input pin.

In a possible implementation of the first aspect, the signal latch unit and the wake-up signal generation unit are electrically connected to a first node, and the first node is electrically connected to the signal input pin.

In a possible implementation of the first aspect, the signal latch unit includes a D flip-flop.

In a possible implementation of the first aspect, the wake-up signal generation unit includes: a first capacitor, a first resistor, and a second resistor, where a first terminal of the first resistor and a first terminal of the second resistor are connected to a second node, the second node is configured to be connected to the external power supply, and a second terminal of the first resistor is connected to a first terminal of the first capacitor.

The wake-up signal generation unit includes: a third resistor, a fourth resistor, a fifth resistor, and a first switch, where a first terminal of the third resistor and a first terminal of the fourth resistor are connected to a third node, the third node is connected to a second terminal of the first capacitor, a second terminal of the third resistor is connected to a first reference ground, a second terminal of the fourth resistor is connected to a first pole of the first switch, a second pole of the first switch is connected to the first reference ground, a second terminal of the second resistor is connected to a first terminal of the fifth resistor, and a second terminal of the fifth resistor is connected to a third pole of the first switch.

The wake-up signal generation unit includes: a first optocoupler, a sixth resistor, and a seventh resistor, where a first pin of the first optocoupler is connected to both the second terminal of the second resistor and the first terminal of the fifth resistor, a second pin of the first optocoupler is connected to both the third pole of the first switch and the second terminal of the fifth resistor, a third pin of the first optocoupler is connected to a second reference ground through the sixth resistor, and a fourth pin of the first optocoupler is connected to the power supply unit through the seventh resistor.

The wake-up signal generation unit includes: a second switch, a third switch, an eighth resistor, and a ninth resistor, where a first pole of the second switch is connected to the third pin of the first optocoupler through the eighth resistor, a second pole of the second switch is connected to the second reference ground, a third pole of the second switch is connected to a first pole of the third switch through the ninth resistor, a second pole of the third switch is connected to the power supply unit, and a third pole of the third switch is connected to the switch drive circuit.

In a possible implementation of the first aspect, the wake-up signal generation unit includes: a tenth resistor, where a first terminal of the tenth resistor is connected to both the second terminal of the first resistor and the first terminal of the first capacitor, and a second terminal of the tenth resistor is connected to the first reference ground.

In a possible implementation of the first aspect, the first switch is an NPN-type transistor or an N-type FET, the second switch is an NPN-type transistor or an N-type FET, and the third switch is a PNP-type transistor or a P-type FET.

When the first switch is an NPN-type transistor, the wake-up signal generation unit includes a first diode, where the first diode is connected in series with the fourth resistor between the first pole of the first switch and the third node.

An anode of the first diode is connected to the third node, and a cathode of the first diode is connected to the first pole of the first switch.

In a possible implementation of the first aspect, the wake-up circuit includes a wake-up identification unit, where the wake-up identification unit is connected to a micro control unit, and the wake-up identification unit is configured to generate a wake-up identification signal based on the external power supply and transmit the wake-up identification signal to the micro control unit.

In a possible implementation of the first aspect, the wake-up identification unit includes a second optocoupler, an eleventh resistor, and a twelfth resistor, where a first pin of the second optocoupler is configured to be connected to the external power supply through the eleventh resistor, a second pin of the second optocoupler is connected to the first reference ground, a third pin of the second optocoupler is connected to the micro control unit, the third pin of the second optocoupler is further connected to the second reference ground through the twelfth resistor, and a fourth pin of the second optocoupler is configured to be connected to a first voltage.

In a possible implementation of the first aspect, the wake-up circuit further includes a second diode; and the wake-up identification unit and the wake-up signal generation unit are configured to be connected to the external power supply through the second diode.

In a possible implementation of the first aspect, the power supply unit includes a first low dropout regulator, a first transformer unit, and a second transformer unit, where an input terminal of the first low dropout regulator is configured to be connected to the external power supply, an output terminal of the first low dropout regulator is connected to an input terminal of the first transformer unit, and an output terminal of the first transformer unit is connected to the wake-up signal generation unit; an input terminal of the second transformer unit is connected to the external power supply through a second low dropout regulator, or the input terminal of the second transformer unit is connected to the output terminal of the first low dropout regulator through the first transformer unit; an output terminal of the second transformer unit is connected to the drive unit; and the first transformer unit includes a first transformer drive circuit and a first transformer connected to each other, and the second transformer unit includes a second transformer drive circuit and a second transformer connected to each other.

According to a second aspect, based on the same inventive concept, an embodiment of this application further provides a battery management system including the wake-up circuit according to the first aspect or any one of these embodiments of the first aspect.

According to a third aspect, based on the same inventive concept, an embodiment of this application further provides a battery system including a battery module and the battery management system according to these embodiments of the second aspect.

The foregoing description is merely an overview of the technical solutions of this application. For a better understanding of the technical means in this application such that they can be implemented according to the content of the specification, and to make the above and other objectives, features, and advantages of this application more obvious and easier to understand, the following describes specific embodiments of this application.

### BRIEF DESCRIPTION OF DRAWINGS

Other features, objectives, and advantages of this application will become more apparent by reading the following detailed description of the non-limitative embodiments with reference to the accompanying drawings, where the same or similar reference signs indicate the same or similar features. The accompanying drawings are not drawn to scale.
FIG. 1 is a schematic diagram of a circuit structure of a wake-up circuit according to an embodiment of this application;
FIG. 2 is a schematic diagram of another circuit structure of a wake-up circuit according to an embodiment of this application;
FIG. 3 is a schematic diagram of a circuit structure of a drive unit in a wake-up circuit according to an embodiment of this application;
FIG. 4 is a schematic diagram of still another circuit structure of a wake-up circuit according to an embodiment of this application;
FIG. 5 is a schematic diagram of a circuit structure of a signal latch unit in a wake-up circuit according to an embodiment of this application;
FIG. 6 is a schematic diagram of a circuit structure of a wake-up signal generation unit in a wake-up circuit according to an embodiment of this application;
FIG. 7 is a schematic diagram of another circuit structure of a wake-up signal generation unit in a wake-up circuit according to an embodiment of this application;
FIG. 8 is a schematic diagram of a circuit structure of a wake-up identification unit in a wake-up circuit according to an embodiment of this application;
FIG. 9 is a schematic diagram of another circuit structure of a wake-up signal generation unit and a wake-up identification unit in a wake-up circuit according to an embodiment of this application;
FIG. 10 is a schematic diagram of a capacitor discharge path in a wake-up circuit according to an embodiment of this application;
FIG. 11 is a schematic diagram of a circuit structure of a power supply unit in a wake-up circuit according to an embodiment of this application;
FIG. 12 is a schematic structural diagram of a battery management system according to an embodiment of this application; and
FIG. 13 is a schematic structural diagram of a battery system according to an embodiment of this application.

Description of reference signs:
10. wake-up circuit; 20. battery module; 30. external power supply;
11. power supply unit;
LDO1. first low dropout regulator;
111. first transformer unit; 1111. first transformer drive circuit; 1112. first transformer;
112. second transformer unit; 1121. second transformer drive circuit; 1122. second transformer;
12. wake-up signal generation unit;
13. drive unit; 131. switch drive circuit; U1. isolated switch driver; MCU. Micro Control Unit; 132. signal latch unit; U2. D flip-flop; M. switch;
14. power circuit;
15. wake-up identification unit;

100. battery management system; and
200. battery system.

### DETAILED DESCRIPTION

The features and example embodiments of various aspects of this application will be described in detail below. To make the objectives, technical solutions, and advantages of this application more comprehensible, the following further describes this application in detail with reference to accompanying drawings and specific embodiments. It should be understood that the specific embodiments described herein are merely intended to explain this application rather than to limit this application.

In this application, when a component is deemed as being "connected to" or "electrically connected to" another component, it may be directly connected to the another component, or there may be one or more components in between.

Implementations provided in some embodiments of this application and specific features in these implementations can be combined with each other without conflict.

Some embodiments of this application provide a wake-up circuit, a battery management system, and a battery system. The following describes these embodiments of this application with reference to the accompanying drawings.

An energy storage system (Energy Storage System, ESS) is a system for storing electrical energy and supplying power externally and is widely used in fields such as residential energy storage, commercial and industrial energy storage, and uninterruptible power supplies. The energy storage system typically includes a battery module and a battery management system. In this application, the battery management system is powered by a battery module. Specifically, the battery module supplies power to a BMU and a BCU in the BMS. When the BMS is not operating, the BMU is in a sleep state, and the BCU is in a shutdown state to reduce the energy consumption of the battery module. The BMU includes an acquisition unit, where the acquisition unit is electrically connected to the battery module and configured to monitor data (such as voltage and temperature) of the battery module, and the BCU is configured to manage the charging and discharging of the battery module. The BCU includes a micro control unit, where the micro control unit of the BCU is communicatively connected to the acquisition unit of the BMU to acquire data of the battery module. As an example, the acquisition unit in the BMU is an analog front-end (Analog Front End, AFE) chip, and the micro control unit in the BCU is a micro control unit (micro control unit, MCU). It can be understood that a voltage of the battery module is typically higher than a power supply voltage (for example, 12 V) of the battery management system, and a voltage conversion circuit or a power circuit is required to convert the voltage of the battery module to the power supply voltage of the battery management system, where the voltage conversion circuit or the power circuit typically has a voltage reduction function.

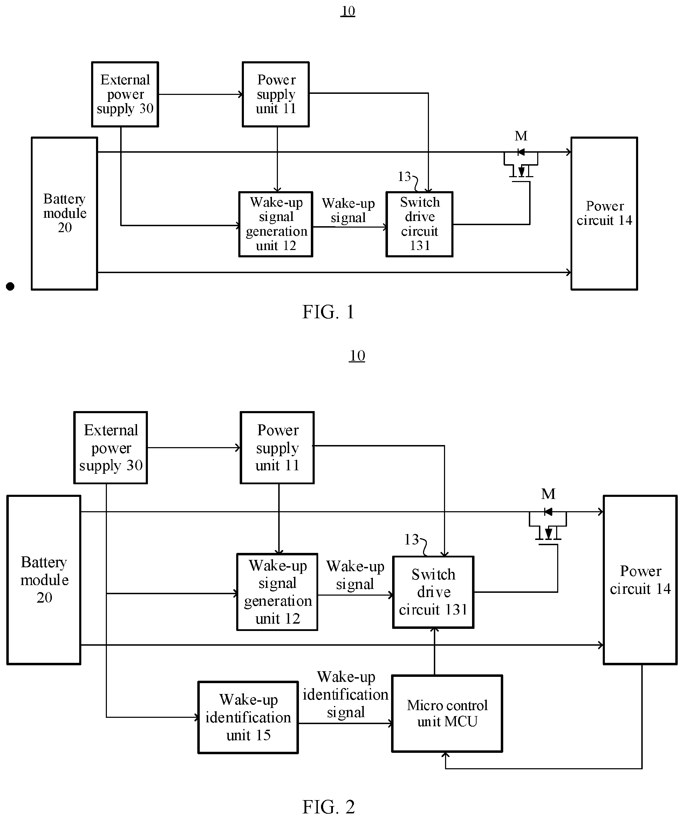

This application provides some embodiments where a battery management system is woken up by an external power supply, where the BMS is woken up by the external power supply. FIG. 1 is a schematic diagram of a circuit structure of a wake-up circuit according to an embodiment of this application. As shown in FIG. 1, the wake-up circuit 10 according to this embodiment of this application includes a power supply unit 11, a wake-up signal generation unit 12, a drive unit 13, a switch M, and a power circuit 14.

The power supply unit 11 is connected to the wake-up signal generation unit 12, and the power supply unit 11 is configured to be connected to an external power supply 30 and supply power to the wake-up signal generation unit 12 based on the external power supply 30; and the wake-up signal generation unit 12 is configured to be connected to the external power supply 30 and generate a wake-up signal based on the external power supply 30.

The drive unit 13 is connected to both the power supply unit 11 and the wake-up signal generation unit 12, where the drive unit 13 includes a switch drive circuit 131. It can be understood that the power supply unit 11 also supplies power to the drive unit 13 based on the external power supply 30. A wake-up signal generated by the wake-up signal generation unit 12 is input to the switch drive circuit 131 of the drive unit 13, and the switch drive circuit 131 outputs a control signal for instructing the switch to be turned on based on the wake-up signal.

The switch M is connected to the power circuit 14, and the switch M is connected to the switch drive circuit 131, where the switch M is configured to be turned on or off based on the output signal of the switch drive circuit 131, and the power circuit 14 is configured to be connected to a battery module 20 through the switch M.

In some examples of this application, the external power supply 30 refers to an external power supply of the battery module. For example, the external power supply 30 refers to a power supply from a power conversion system (Power Conversion System, PCS); or the external power supply 30 refers to a power supply from an auxiliary small battery (for example, with an output voltage range of 9 V to 16 V); or the external power supply 30 refers to a power supply from another device.

It can be understood that when the BMS is woken up using the external power supply 30, the external power supply 30 supplies power to the wake-up circuit 10, and after the BMS is woken up, the battery module supplies power to the BMS.

The switch M includes a metal-oxide-semiconductor field-effect transistor (Metal-Oxide-Semiconductor Field-Effect Transistor, MOSFET). Certainly, in another example, the switch M may alternatively be a switch of another type, for example, a relay. This is not limited in this application.

The switch M is connected between the battery module 20 and the power circuit 14. As an example, the switch M is connected between a positive electrode of the battery module 20 and a positive input terminal of the power circuit 14.

It can be understood that when the switch M is in an on state, the battery module 20 and the power circuit 14 are connected, the power circuit 14 is in an operating state, and the power circuit 14 reduces a voltage of the battery module, generates power, and supplies the power to the battery management system. In this case, the battery management system is in an operating state. When the switch M is in an off state, an electrical connection between the battery module 20 and the power circuit 14 is disabled, and the power circuit 14 is in a non-operating state. In this case, the power circuit 14 cannot supply power to the BCU, the BCU is powered off and is in a shutdown state, and the BMU is in a sleep state.

It can be understood that the wake-up signal generated by the wake-up signal generation unit 12 is used for waking up the battery management system. Specifically, the wake-up signal generated by the wake-up signal generation unit 12 is used for instructing the switch M to be turned on. When the switch M is turned on, an electrical connection is established between the power circuit and the battery module, the power is supplied to the BCU, the MCU in the BCU is powered on, and the BMS is woken up.

For example, the power circuit 14 is located on a first circuit board, where the first circuit board serves as a power board (POWER board). The power supply unit 11, the wake-up signal generation unit 12, the drive unit 13, and the switch M are located on a second circuit board, where the second circuit board serves as a control board. Certainly, this is merely an example and is not intended to limit this application.

According to the power circuit provided in this embodiment of this application, when the external power supply 30 is powered and connected to the power supply unit 11, the power supplied by the external power supply 30 is input to the power supply unit 11; the power supply unit 11 processes the power from the external power supply 30 to output wake-up power; the wake-up power supplies power to the wake-up signal generation unit 12 and the drive unit 13; the wake-up signal generation unit 12 starts operating and generates a wake-up signal based on the power provided by the external power supply 30; the drive unit 13 starts operating; and the switch drive circuit 131 generates a control signal for instructing the switch M to be turned on based on the wake-up signal generated by the wake-up signal generation unit 12. After the switch M receives the control signal for instructing the switch M to be turned on from the switch drive circuit 131, the switch M is turned on; and after the switch M is turned on, an electrical connection between the battery module 20 and the power circuit 14 is established, the power circuit 14 is in an operating state, and the power circuit 14 can generate power and supply the power to the battery management system, thereby achieving the wake-up of the battery management system.

In some embodiments, the power supply unit 11 includes a first power supply unit and a second power supply unit, where the first power unit supplies power to the wake-up signal generation unit 12, and the second power supply unit supplies power to the drive unit 13, the first power supply unit outputs a first voltage (for example, 5 V), and the second power supply unit outputs a second voltage (for example, 10 V).

In some embodiments, the switch drive circuit 131 can not only generate the control signal for instructing the switch M to be turned on based on the wake-up signal but also generate a control signal for instructing the switch M to be turned off.

The implementation details of the wake-up circuit of this embodiment are described in detail below. The following content is provided only for ease of understanding and is not necessary for implementing this solution.

The inventors have found through further research that when the external power supply 30 is continuously powered, the wake-up signal generation unit 12 continuously generates the wake-up signal, so that the battery management system cannot achieve autonomous power-off, and the BMS continuously consumes the electrical energy of the battery module, failing to achieve low-power management of the energy storage system.

Based on this, in some optional embodiments, the wake-up signal ends after a preset time. In other words, after generating the wake-up signal, the wake-up signal generation unit 12 stops generating the wake-up signal after the preset time to facilitate autonomous power-off of the battery management system. Specifically, after the wake-up signal ends, the control signal output by the switch drive circuit 131 is used for controlling whether the switch M continues to be turned on. When power-off is required, the control signal output by the switch drive circuit 131 is used for controlling the switch M to be turned off, and the connection between the power circuit 14 and the battery module 20 is disabled, so that the battery module 20 cannot supply power to the battery management system, thereby achieving autonomous power-off of the battery management system.

The preset time can be set according to actual needs and is not limited in this application. When the wake-up signal generated by the wake-up signal generation unit 12 can be used for instructing the switch M to be turned on, a connection is established between the power circuit 14 and the battery module 20, thereby achieving the wake-up of the battery management system. In some embodiments, the preset time is a relatively short period of time.

FIG. 2 is a schematic diagram of another circuit structure of a wake-up circuit according to an embodiment of this application. As shown in FIG. 2, in some embodiments, the wake-up circuit 10 according to this embodiment of this application further includes a wake-up identification unit 15, and the drive unit includes a switch drive circuit 131 and a micro control unit MCU electrically connected to the switch drive circuit 131. The wake-up identification unit 15 is connected to the micro control unit MCU and the external power supply 30, where the wake-up identification unit 15 is configured to generate a wake-up identification signal based on the external power supply 30 and transmit the wake-up identification signal to the micro control unit MCU. The micro control unit may also be referred to as a microcontroller unit (Microcontroller unit).

After receiving the wake-up identification signal generated by the wake-up identification unit 15, the micro control unit MCU can identify the external power supply 30.

For example, the micro control unit MCU is connected to the power circuit 14. The power generated by the power circuit 14 is supplied to the micro control unit MCU, and after the MCU is powered on, the BMS is woken up.

The micro control unit MCU is electrically connected to the switch drive circuit 131, and the micro control unit MCU outputs a control signal to the switch drive circuit 131; and the switch drive circuit 131 controls the switch M to maintain an on state or switch to an off state based on the control signal of the micro control unit MCU.

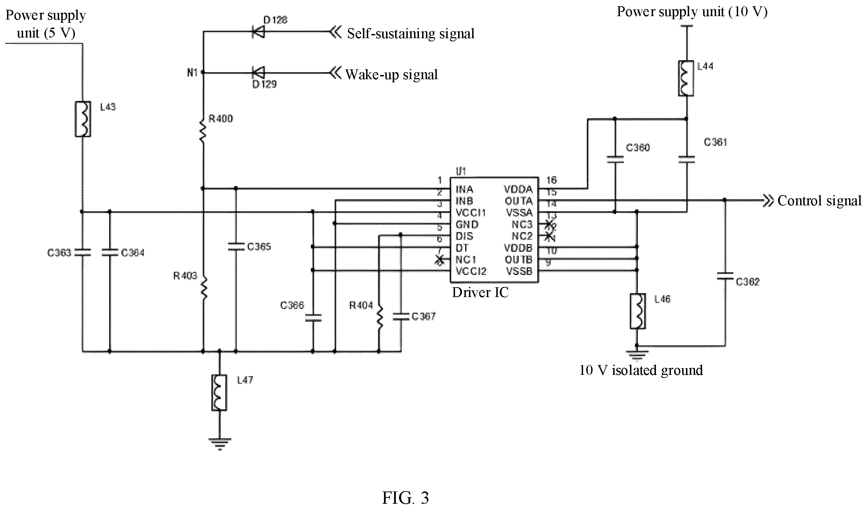

In some optional embodiments, as shown in FIG. 3, the switch drive circuit 131 includes an isolated switch driver U1, where the isolated switch driver U1 includes a primary side power voltage pin VDDA, a secondary side power voltage pin VCCI1, a signal input pin INA, and a signal output pin OUTA.

The power supply unit 11 is connected to both the primary side power voltage pin VDDA and the secondary side power voltage pin VCCI1, the signal input pin INA is connected to the wake-up signal generation unit 12, and the signal output pin OUTA is connected to the switch M. The signal input pin INA is used for receiving the wake-up signal generated by the wake-up signal generation unit, and the signal output pin OUTA outputs a control signal, where the control signal is used for controlling the switch M to be turned on or off.

The power supply unit 11 generates different power voltages and supplies the power voltages to the primary side power voltage pin VDDA and the secondary side power voltage pin VCCI1, respectively. For example, a power voltage of 10 V is input to the primary side power voltage pin VDDA, and a power voltage of 5 V is input to the secondary side power voltage pin VCCI1.

The isolated switch driver U1 is a driver chip, and the isolated switch driver U1 is in an operating state after being powered by the power supply unit 11. During operation, if the isolated switch driver U1 receives the wake-up signal generated by the wake-up signal generation unit, a control signal output by the isolated switch driver U1 is used for controlling the switch M to be turned on.

To improve the reliability and stability of the circuit, as shown in FIG. 3, as an example, the switch drive circuit 131 further includes some components such as resistors, capacitors, inductors, and diodes, where connection relationships between these components are shown in FIG. 3. It can be understood that circuit structures at the periphery of the isolated switch driver U1 shown in FIG. 3 are merely some examples and are not intended to limit this application.

As described above, the wake-up signal ends after a preset time, and after the wake-up signal ends, the wake-up circuit generates a self-sustaining signal to maintain the on state of the switch M, thereby maintaining the wake-up state.

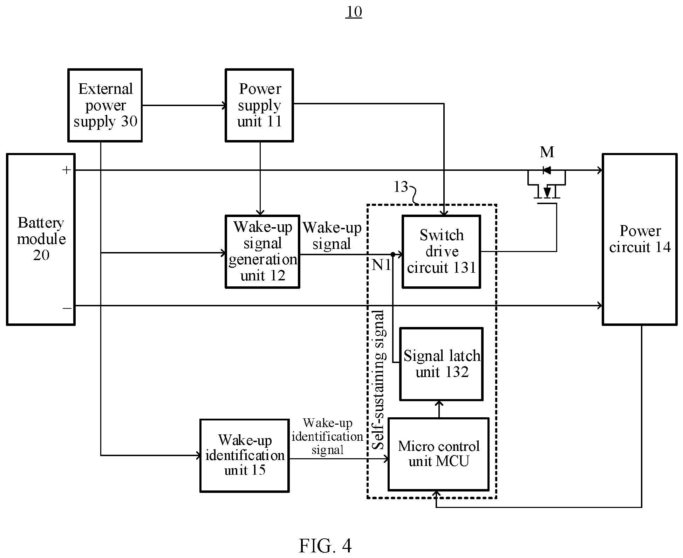

In some embodiments, as shown in FIG. 4, the drive unit 13 further includes a micro control unit MCU and a signal latch unit 132, where the micro control unit MCU is connected to the power circuit 14, and the signal latch unit 132 is connected to both the micro control unit MCU and the signal input pin INA of the isolated switch driver U1.

The signal latch unit 132 maintains its output state unchanged based on an input signal until another input signal arrives to change its state, and the input signal of the signal latch unit 132 comes from the micro control unit MCU.

The micro control unit MCU provides a control signal to the signal latch unit 132, and the signal latch unit 132 outputs a self-sustaining signal under the control of the micro control unit MCU, where the self-sustaining signal is transmitted to the signal input pin INA of the isolated switch driver U1, and the signal output pin OUTA of the isolated switch driver U1 outputs a control signal to control the switch M to maintain an on state.

When power-off is required, the signal latch unit 132 stops outputting the self-sustaining signal under the control of the micro control unit MCU. When the isolated switch driver U1 does not receive the self-sustaining signal, the signal output pin OUTA of the isolated switch driver U1 outputs a control signal to control the switch M to be turned off, and an electrical connection between the power circuit 14 and the battery module 20 is disabled, the micro control unit MCU has no power supply, and the BCU is powered off and enters a shutdown state.

In some embodiments, referring to FIG. 3 and FIG. 4, the signal latch unit 132 and the wake-up signal generation unit 12 are electrically connected to a first node N1, and the first node N1 is electrically connected to the signal input pin INA of the isolated switch driver U1.

When the external power supply 30 is powered, the power supply unit 11 supplies power to the wake-up signal generation unit 12, and then the wake-up signal generation unit 12 generates a wake-up signal. The wake-up signal is transmitted to the signal input pin INA of the isolated switch driver U1 via the first node N1, and the isolated switch driver U1 controls the switch M to be turned on based on the received wake-up signal. After the switch M is turned on, the power circuit 14 and the battery module 20 are connected, the power circuit 14 supplies power to the micro control unit MCU, and the micro control unit MCU provides a control signal to the signal latch unit 132, causing the signal latch unit 132 to output a self-sustaining signal. The self-sustaining signal is transmitted to the signal input pin INA of the isolated switch driver U1 via the first node N1, and the isolated switch driver U1 controls the switch M to maintain an on state based on the received self-sustaining signal. The wake-up signal generation unit 12 stops generating the wake-up signal after a preset time, and the signal latch unit 132 outputs the self-sustaining signal, causing the switch M to maintain an on state.

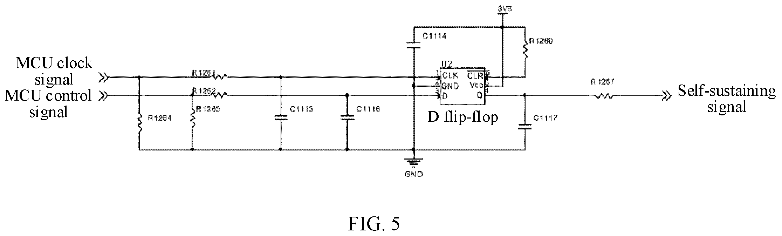

As an example, as shown in FIG. 5, the signal latch unit includes a D flip-flop U2. A clock signal terminal CLK of the D flip-flop U2 is electrically connected to the micro control unit MCU to receive a clock signal from the micro control unit MCU. An input terminal D of the D flip-flop U2 is electrically connected to the micro control unit MCU to receive a control signal from the micro control unit MCU. An output terminal Q of the D flip-flop U2 outputs a self-sustaining signal. In addition, a power terminal Vcc of the D flip-flop U2 is connected to a 3.3 V power supply and operates under the drive of the 3.3 V power supply. The 3.3 V power supply is generated after the power circuit 14 operates.

To improve the stability and reliability of the circuit, the signal latch unit 132 further includes some components such as resistors and capacitors arranged at the periphery of the D flip-flop U2, where connection relationships of these components can be referred to in FIG. 5 and are not repeated here.

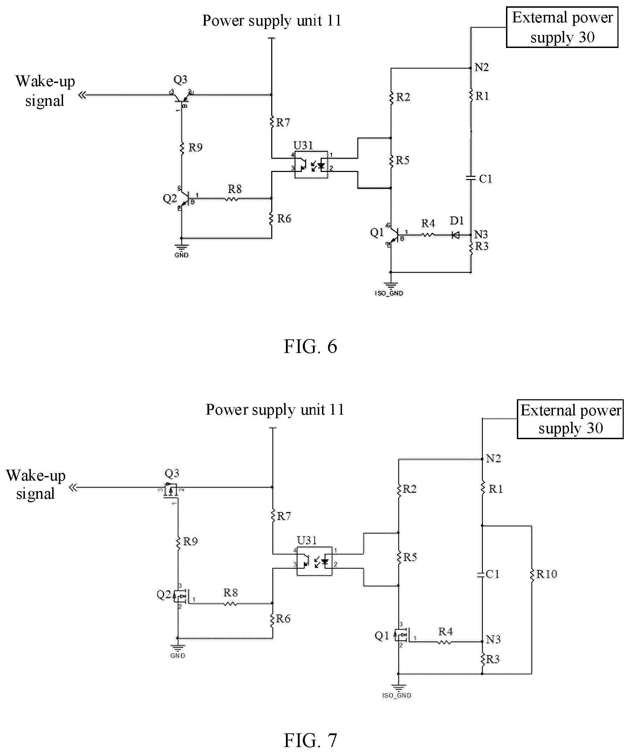

In some embodiments, as shown in FIG. 6 or FIG. 7, the wake-up signal generation unit includes a first capacitor C1, a first resistor R1, a second resistor R2, a third resistor R3, a fourth resistor R4, a fifth resistor R5, a first switch Q1, a first optocoupler U31, a sixth resistor R6, a seventh resistor R7, a second switch Q2, a third switch Q3, an eighth resistor R8, and a ninth resistor R9.

A first terminal of the first resistor R1 and a first terminal of the second resistor R2 are connected to a second node N2, the second node N2 is configured to be connected to the external power supply, and a second terminal of the first resistor R1 is connected to a first terminal of the first capacitor C1.

A first terminal of the third resistor R3 and a first terminal of the fourth resistor R4 are connected to a third node N3, the third node N3 is connected to a second terminal of the first capacitor C1, a second terminal of the third resistor R3 is connected to a first reference ground ISO_GND, a second terminal of the fourth resistor R4 is connected to a first pole of the first switch Q1, a second pole of the first switch Q1 is connected to the first reference ground ISO_GND, a second terminal of the second resistor R2 is connected to a first terminal of the fifth resistor R5, and a second terminal of the fifth resistor R5 is connected to a third pole of the first switch Q1.

A first pin of the first optocoupler U31 is connected to both the second terminal of the second resistor R2 and the first terminal of the fifth resistor R5, a second pin of the first optocoupler U31 is connected to both the third pole of the first switch Q1 and the second terminal of the fifth resistor R5, a third pin of the first optocoupler U31 is connected to a second reference ground GND through the sixth resistor R6, and a fourth pin of the first optocoupler U31 is connected to the power supply unit 11 through the seventh resistor R7. For example, the power supply unit 11 generates a 5 V power supply to supply power to the wake-up signal generation unit 12, that is, a 5 V power supply is connected to the fourth pin of the first optocoupler U31 through the seventh resistor R7.

A first pole of the second switch Q2 is connected to the third pin of the first optocoupler U31 through the eighth resistor R8, a second pole of the second switch Q2 is connected to the second reference ground GND, a third pole of the second switch Q2 is connected to a first pole of the third switch Q3 through the ninth resistor R9, a second pole of the third switch Q3 is connected to the power supply unit 11, and a third pole of the third switch Q3 is connected to the switch drive circuit 131. The third pole of the third switch Q3 outputs a wake-up signal, and the wake-up signal is transmitted to the switch drive circuit 131.

The following example describes an operation process of the wake-up signal generation unit.

At the moment when the external power supply 30 is connected to the wake-up signal generation circuit, since the voltage across the first capacitor C1 cannot change abruptly, the first capacitor C1 is approximately short-circuited at the moment of power-on, and at this time, the first resistor R1 and the third resistor R3 perform voltage division, and the third resistor R3 can receive a voltage of a first value. This voltage of the first value can drive the first switch Q1 to be turned on. After the first switch Q1 is turned on, a potential of the third pole of the first switch Q1 is pulled to a potential of the first reference ground, so a potential of the second pin of the first optocoupler U31 is pulled to the potential of the first reference ground. At this time, the second resistor R2 and the fifth resistor R5 perform voltage division, and the fifth resistor R5 receives a voltage of a second value, driving the first optocoupler U31 to be turned on. After the first optocoupler U31 is turned on, the seventh resistor R7 and the sixth resistor R6 perform voltage division, and the sixth resistor R6 receives a voltage of a third value, where this voltage of the third value drives the second switch Q2 to be turned on. After the second switch Q2 is turned on, a voltage of the third pole of the second switch Q2 is pulled to the first reference ground. Therefore, the first pole of the third switch Q3 is pulled to the first reference ground. At this time, a voltage of the second pole of the third switch Q3 is greater than a voltage of the first pole, and the third switch Q3 is turned on. At this time, the third pole of the third switch Q3 outputs a wake-up signal to the switch drive circuit, thereby achieving the output of the wake-up signal.

In some examples, the impedance of the first resistor R1 and the sixth resistor R6 is 100 kΩ; the impedance of the second resistor R2, the fifth resistor R5, and the seventh resistor R7 is 10 kΩ; and the impedance of the third resistor R3 is 510 kΩ. It should be noted that the parameters of the components in the above example are merely an example and are not intended to limit this application.

In some optional embodiments, as shown in FIG. 7, the wake-up signal generation unit further includes a tenth resistor R10, where a first terminal of the tenth resistor R10 is connected to both the second terminal of the first resistor R1 and the first terminal of the first capacitor C1, and a second terminal of the tenth resistor R10 is connected to the first reference ground ISO_GND.

The tenth resistor R10 can serve as a discharge path for the first capacitor C1.

After the first capacitor C1 is fully charged, the voltage across the third resistor R3 is almost 0. At this time, the first switch Q1 is turned off, and the first optocoupler U31 is also turned off. After the first optocoupler U31 is turned off, the voltage across the sixth resistor R6 is 0, the second switch Q2 is turned off, the third switch Q3 is turned off, and the wake-up signal generation unit stops outputting the wake-up signal, causing the wake-up signal to end after a preset time. It can be understood that the wake-up signal ends after a preset time, where the preset time is approximately the time taken for the first capacitor C1 to be fully charged; and after fully charged, the first capacitor C1 is discharges through the tenth resistor R10.

After the wake-up signal ends, the battery management system outputs a control signal to the signal latch unit through the micro control unit MCU, and the signal latch unit outputs a self-sustaining signal to the isolated switch driver, and the isolated switch driver outputs a control signal based on the received self-sustaining signal to control the switch M to be turned on, thereby maintaining the wake-up state. When autonomous power-off is required, the micro control unit MCU stops outputting the control signal, the signal latch unit stops outputting the self-sustaining signal, and the isolated switch driver outputs a control signal to control the switch M to be turned off, achieving the power-off of the battery management system.

For example, any one of the first switch Q1, the second switch Q2, and the third switch Q3 is a transistor or a field-effect transistor (Field Effect Transistor, FET).

For example, referring to FIG. 6 and FIG. 7, the first switch Q1 is an NPN-type transistor or an N-type FET, the second switch Q2 is an NPN-type transistor or an N-type FET, and the third switch Q3 is a PNP-type transistor or a P-type FET.

In some embodiments, as shown in FIG. 6, when the first switch Q1 is an NPN-type transistor, the wake-up signal generation unit further includes a first diode D1, where the first diode D1 is connected in series with the fourth resistor R4 between the first pole of the first switch Q1 and the third node N3. An anode of the first diode D1 is connected to the third node N3, and a cathode of the first diode D1 is connected to the first pole of the first switch Q1.

The first diode D1 has a unidirectional conduction function, allowing current to flow only from the anode to the cathode, so when the first diode D1 is provided, the first diode D1 can prevent a discharge current of the first capacitor C1 from flowing through the first switch Q1, thereby avoiding damage to the first switch Q1.

It can be understood that since a transistor has a signal amplification function, when the switch in the wake-up signal generation unit is a transistor, the transistor can be configured to amplify the wake-up signal, allowing wake-up with a smaller drive current.

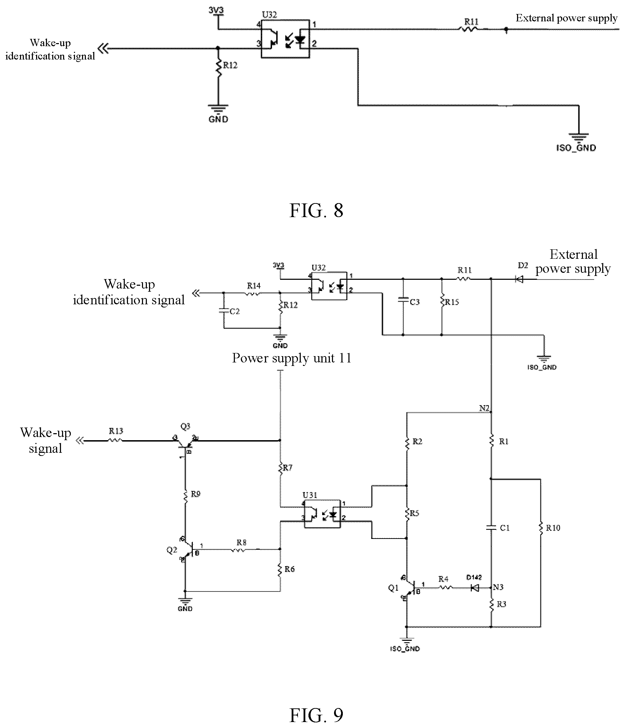

In some optional embodiments, as shown in FIG. 8, the wake-up identification unit includes a second optocoupler U32, an eleventh resistor R11, and a twelfth resistor R12.

A first pin of the second optocoupler U32 is configured to be connected to the external power supply 30 through the eleventh resistor R11, a second pin of the second optocoupler U32 is connected to the first reference ground ISO_GND, a third pin of the second optocoupler U32 is connected to the micro control unit, the third pin of the second optocoupler U32 is further connected to a second reference ground GND through the twelfth resistor R12, and a fourth pin of the second optocoupler U32 is configured to be connected to a first voltage (for example, the first voltage is 3.3 V).

The third pin of the second optocoupler U32 outputs a wake-up identification signal, and the wake-up identification signal can be transmitted to the micro control unit.

After the wake-up signal generation unit generates a wake-up signal, the switch M is turned on, the power circuit 14 starts operating and outputs a power supply voltage (for example, 12 V) for to the BMS, so that the battery management system is powered by the power circuit 14, and a voltage conversion circuit (for example, a Buck converter or a low dropout regulator) on the BMS converts the above power supply voltage to a first voltage (for example, 3.3 V). The input of the external power supply allows the second optocoupler U32 to be turned on, and at this time, the wake-up identification signal is output to the micro control unit MCU, and the micro control unit MCU identifies a corresponding wake-up source after receiving a high-level signal.

The twelfth resistor R12 provides a stable pull-down level when the second optocoupler U32 is in an off state, thereby preventing erroneous operation of the micro control unit MCU.

In some optional embodiments, as shown in FIG. 9, the wake-up circuit further includes a second diode D2, where the wake-up identification unit and the wake-up signal generation unit are configured to be connected to the external power supply 30 through the second diode D2. The second diode D2 serves as a reverse-connection prevention diode for the external power supply 30, preventing current from flowing to the external power supply 30, thereby protecting the external power supply 30.

For example, as shown in FIG. 9, the wake-up signal generation unit further includes a thirteenth resistor R13, and the wake-up identification unit further includes a fourteenth resistor R14, a fifteenth resistor R15, a second capacitor C2, and a third capacitor C3, where connection positions of these resistors and capacitors can be referred to FIG. 9 and not repeated here.

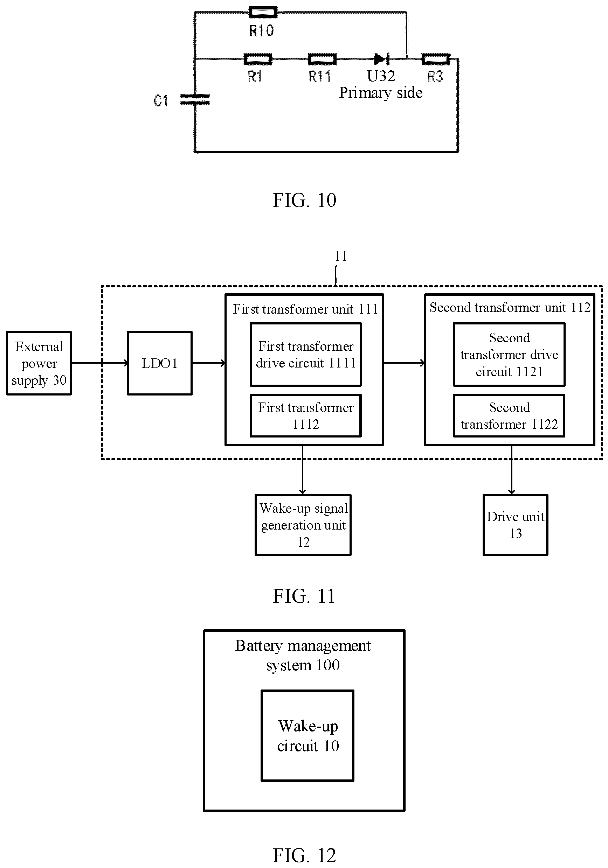

Referring to FIG. 9, both the wake-up identification unit and the wake-up signal generation unit are electrically connected to the first reference ground ISO_GND. As shown in FIG. 10, when the first capacitor C1 discharges, there are two discharge paths, where one discharge path is the first capacitor C1 discharging through the tenth resistor R10 and the third resistor R3, and the other discharge path is the first capacitor C1 discharging through the first resistor R1, the eleventh resistor R11, a primary side of the second optocoupler U32, and the third resistor R3.

In some embodiments, the power supply unit 11 outputs different voltages according to different requirements. As shown in FIG. 11, the power supply unit 11 includes a first low dropout regulator LDO1 (Low Dropout Regulator, LDO), a first transformer unit 111, and a second transformer unit 112.

An input terminal of the first low dropout regulator LDO1 is configured to be connected to the external power supply 30, an output terminal of the first low dropout regulator LDO1 is connected to an input terminal of the first transformer unit 111, and an output terminal of the first transformer unit 111 is connected to the wake-up signal generation unit. For example, the output terminal of the first transformer unit 111 outputs a 5 V power supply to the wake-up signal generation unit.

An input terminal of the second transformer unit 112 is connected to the output terminal of the first low dropout regulator LDO1 through the first transformer unit 111. In this case, output power of the first transformer unit 111 serves as input power of the second transformer unit 112.

In some other embodiments, the first transformer unit 111 includes a first transformer drive circuit, a first transformer, and a second low dropout regulator LDO2, where the second low dropout regulator LDO2 outputs a 5 V power supply to the wake-up signal generation unit. The input terminal of the second transformer unit 112 is connected to the external power supply through the second low dropout regulator LDO2. In this case, the power stabilized by the second low dropout regulator from the external power supply serves as the input power of the second transformer unit 112.

An output terminal of the second transformer unit 112 is connected to the drive unit. For example, the output terminal of the second transformer unit 112 outputs a 10 V power supply to the drive unit. It can be understood that when the drive unit also requires a 5 V power supply, the output terminal of the first transformer unit 111 is also electrically connected to the drive unit.

The first transformer unit 111 includes a first transformer drive circuit 1111 and a first transformer 1112 connected to each other, and the second transformer unit 112 includes a second transformer drive circuit 1121 and a second transformer 1122 connected to each other.

The transformer drive circuit serves as a driver IC of the transformer, controlling an operating state of the transformer.

The low dropout regulator, the transformer drive circuit, and the transformer can adopt structures in the prior art, and are not repeated in this application.

Based on the same inventive concept, this application further provides a battery management system. As shown in FIG. 12, a battery management system 100 according to an embodiment of this application includes the wake-up circuit 10 according to any one of the foregoing embodiments. The battery management system according to this embodiment of this application has the beneficial effects of the wake-up circuit according to the foregoing embodiments of this application. For details, reference can be made to the specific description of the wake-up circuit in the foregoing embodiments, and details are not repeated in this embodiment.

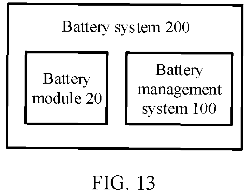

Based on the same inventive concept, this application further provides a battery system. As shown in FIG. 13, a battery system 200 according to an embodiment of this application includes a battery module 20 and the battery management system 100 according to any one of the foregoing embodiments, where the battery management system 100 includes the wake-up circuit 10 according to any one of the foregoing embodiments. The battery system according to this embodiment of this application has the beneficial effects of the wake-up circuit according to the foregoing embodiments of this application. For details, reference can be made to the specific description of the wake-up circuit in the foregoing embodiments, and details are not repeated in this embodiment.

For example, the battery management system 100 and the battery module 20 can be connected through a wire harness or a busbar, for example, through a power wire harness and a signal wire harness. During charging and discharging of the battery module 20, current flows through the power wire harness, and the battery management system 100 acquires information of the battery module 20 through the signal wire harness, such as the voltage and temperature of the battery module 20 and the voltage of a battery cell in the battery module 20.

The battery module 20 includes a plurality of battery cells connected in parallel, series, or series-parallel, and is configured to store and provide electrical energy. The battery management system 100 is configured to manage the charging and discharging of the battery module 20 to improve the utilization efficiency of the battery module 20 and reduce faults. The battery cells being connected in series-parallel refers to a combination of series and parallel connections of the battery cells 20.

It should be noted that in these embodiments shown in the foregoing figures, the resistor is represented as a single resistor, and the capacitor is represented as a single capacitor. In another embodiment, the resistor may alternatively be an integration of resistors connected in series, parallel, or series-parallel, and the capacitor may alternatively be an integration of capacitors connected in series, parallel, or series-parallel. The specific parameters of the components can be set according to actual needs and are not limited in this application.

## Claims

1. A wake-up circuit (10), **characterized in that**, the wake-up circuit (10) comprising:
a power supply unit (11) and a wake-up signal generation unit (12) connected to the power supply unit (11), wherein the power supply unit (11) is configured to be connected to an external power supply (30) and supply power to the wake-up signal generation unit (12) based on the external power supply (30), and the wake-up signal generation unit (12) is configured to be connected to the external power supply (30) and generate a wake-up signal based on the external power supply (30);
a drive unit (13) connected to both the power supply unit (11) and the wake-up signal generation unit (12), wherein the drive unit (13) comprises a switch drive circuit (131); and
a switch (M) and a power circuit (14) connected to the switch (M), wherein the switch (M) is connected to the switch drive circuit (14) and configured to be turned on or off based on a control signal of the switch drive circuit (131), and the power circuit (14) is configured to be connected to a battery module (20) through the switch (M).

2. The wake-up circuit (10) according to claim 1, **characterized in that** the wake-up signal ends after a preset time.

3. The wake-up circuit (10) according to claim 1 or 2, **characterized in that** the switch drive circuit (131) comprises an isolated switch driver (U1), and the isolated switch driver (U1) comprises a primary side power voltage pin, a secondary side power voltage pin, a signal input pin, and a signal output pin; and
the power supply (11) unit is connected to both the primary side power voltage pin and the secondary side power voltage pin, the signal input pin is connected to the wake-up signal generation unit (12), and the signal output pin is connected to the switch (M).

4. The wake-up circuit (10) according to claim 3, **characterized in that** the drive unit (13) comprises:
a micro control unit, wherein the micro control unit is connected to the power circuit (14); and
a signal latch unit (132), wherein the signal latch unit (132) is connected to both the micro control unit and the signal input pin.

5. The wake-up circuit (10) according to claim 4, **characterized in that**
the signal latch unit (132) and the wake-up signal generation unit (12) are electrically connected to a first node, and the first node is electrically connected to the signal input pin.

6. The wake-up circuit (10) according to claim 4 or 5, **characterized in that**
the signal latch unit (132) comprises a D flip-flop (U2).

7. The wake-up circuit (10) according to any one of claims 1 to 6, **characterized in that** the wake-up signal generation unit (12) comprises:
a first capacitor, a first resistor, and a second resistor, wherein a first terminal of the first resistor and a first terminal of the second resistor are connected to a second node, the second node is configured to be connected to the external power supply, and a second terminal of the first resistor is connected to a first terminal of the first capacitor;
a third resistor, a fourth resistor, a fifth resistor, and a first switch, wherein a first terminal of the third resistor and a first terminal of the fourth resistor are connected to a third node, the third node is connected to a second terminal of the first capacitor, a second terminal of the third resistor is connected to a first reference ground, a second terminal of the fourth resistor is connected to a first pole of the first switch, a second pole of the first switch is connected to the first reference ground, a second terminal of the second resistor is connected to a first terminal of the fifth resistor, and a second terminal of the fifth resistor is connected to a third pole of the first switch;
a first optocoupler, a sixth resistor, and a seventh resistor, wherein a first pin of the first optocoupler is connected to both the second terminal of the second resistor and the first terminal of the fifth resistor, a second pin of the first optocoupler is connected to both the third pole of the first switch and the second terminal of the fifth resistor, a third pin of the first optocoupler is connected to a second reference ground through the sixth resistor, and a fourth pin of the first optocoupler is connected to the power supply unit through the seventh resistor; and
a second switch, a third switch, an eighth resistor, and a ninth resistor, wherein a first pole of the second switch is connected to the third pin of the first optocoupler through the eighth resistor, a second pole of the second switch is connected to the second reference ground, a third pole of the second switch is connected to a first pole of the third switch through the ninth resistor, a second pole of the third switch is connected to the power supply unit, and a third pole of the third switch is connected to the switch drive circuit.

8. The wake-up circuit (10) according to claim 7, **characterized in that** the wake-up signal generation (12) unit comprises:
a tenth resistor, wherein a first terminal of the tenth resistor is connected to both the second terminal of the first resistor and the first terminal of the first capacitor, and a second terminal of the tenth resistor is connected to the first reference ground.

9. The wake-up circuit (10) according to claim 7 or 8, **characterized in that**
the first switch is an NPN-type transistor or an N-type FET, the second switch is an NPN-type transistor or an N-type FET, and the third switch is a PNP-type transistor or a P-type FET;
when the first switch is an NPN-type transistor, the wake-up signal generation unit comprises a first diode, and the first diode is connected in series with the fourth resistor between the first pole of the first switch and the third node; and
an anode of the first diode is connected to the third node, and a cathode of the first diode is connected to the first pole of the first switch.

10. The wake-up circuit (10) according to any one of claims 1 to 9, **characterized in that** the wake-up circuit (10) comprises a wake-up identification unit (15);
the wake-up identification (15) unit is connected to the micro control unit, and the wake-up identification unit is configured to generate a wake-up identification signal based on the external power supply (30) and transmit the wake-up identification signal to the micro control unit.

11. The wake-up circuit (10) according to claim 10, **characterized in that**
the wake-up identification unit (15) comprises a second optocoupler, an eleventh resistor, and a twelfth resistor;
a first pin of the second optocoupler is configured to be connected to the external power supply (30) through the eleventh resistor, a second pin of the second optocoupler is connected to the first reference ground, a third pin of the second optocoupler is connected to the micro control unit, the third pin of the second optocoupler is further connected to the second reference ground through the twelfth resistor, and a fourth pin of the second optocoupler is configured to be connected to a first voltage.

12. The wake-up circuit (10) according to claim 10 or 11, **characterized in that** the wake-up circuit (10) further comprises a second diode; and the wake-up identification unit (15) and the wake-up signal generation unit (12) are configured to be connected to the external power supply (30) through the second diode.

13. The wake-up circuit (10) according to any one of claims 1 to 12, **characterized in that** the power supply unit (11) comprises a first low dropout regulator (LDO1), a first transformer unit (111), and a second transformer unit (112);
an input terminal of the first low dropout regulator (LDO1) is configured to be connected to the external power supply (30), an output terminal of the first low dropout regulator (LDO1) is connected to an input terminal of the first transformer unit (111), and an output terminal of the first transformer unit (111) is connected to the wake-up signal generation unit (12);
an input terminal of the second transformer unit (112) is connected to the external power supply (30) through a second low dropout regulator, or the input terminal of the second transformer unit (112) is connected to the output terminal of the first low dropout regulator (LDO1) through the first transformer unit (111);
an output terminal of the second transformer unit (112) is connected to the drive unit (13); and
the first transformer unit (111) comprises a first transformer drive circuit (1111) and a first transformer (1112) connected to each other, and the second transformer unit (112) comprises a second transformer drive circuit (1121) and a second transformer (1122) connected to each other.

14. A battery management system (100), **characterized in that**, the battery management system (100) comprising the wake-up circuit (10) according to any one of claims 1 to 13.

15. A battery system (200), **characterized in that**, the battery system (200) comprising:
a battery module (20), and the battery management system (100) according to claim 14.
